# EUROPEAN PATENT APPLICATION

(11) **EP 4 818 273 A1**
(43) Date of publication of application: **07.10.2026**
(21) Application number: 26168602.6
(22) Date of filing: 27.03.2026
(51) Int. Cl.: C09D 11/102, C09D 11/12, C09D 11/38, C09D 11/40, C09D 11/54, C09D 11/322, D06P 5/30

(54) **AQUEOUS INK FOR INKJET RECORDING, INK SET, INKJET RECORDING DEVICE, AND IMAGE FORMING METHOD**

(30) Priority: 31.03.2025 JP 2025059452; 06.03.2026 JP 2026035984
(71) Applicant: BROTHER KOGYO KABUSHIKI KAISHA, Aichi-ken 467-8561 (JP)
(72) Inventor: HIGUCHI, Takayuki, Nagoya, 467-8562 (JP); ITO, Shinpei, Nagoya, 467-8562 (JP); KAWAKAMI, Takefumi, Nagoya, 467-8562 (JP); OTANI, Hana, Nagoya, 467-8562 (JP); ISAKA, Yuta, Nagoya, 467-8562 (JP); NISHIKAWA, Aoi, Nagoya, 467-8562 (JP); TAGA, Yasuhiro, Nagoya, 467-8562 (JP); MIYAGAWA, Nanako, Nagoya, 467-8562 (JP)
(74) Representative: Kuhnen & Wacker Patent- und Rechtsanwaltsbüro PartG mbB

(57) **Abstract**

An aqueous ink for inkjet recording for forming an image on a fabric contains a pigment, a binder, and a crosslinking agent. The binder may be a polyurethane resin having a polyester backbone. The crosslinking agent may be an oxazoline group-containing compound. A ratio of an amount of the binder to an amount of the pigment is 1.40 or greater. A ratio of an amount of the crosslinking agent to an amount of the binder is 0.15 or greater.

## Description

### TECHNICAL FIELD

The present specification discloses a technology relating to aqueous ink for inkjet recording, an ink set, an inkjet recording apparatus, and an image forming method. In particular, the present specification discloses a technology concerning aqueous inks suitable for fabric printing on a fabric.

### BACKGROUND

Patent Literature 1 discloses an aqueous ink for inkjet recording used for fabric printing. This aqueous ink includes a pigment, a water-dispersible resin, and a crosslinking agent.

### PATENT LITERATURE

Patent Literature 1: JP2019-031611A

### SUMMARY

Generally, fabrics are subjected to water washing, and therefore, high wash fastness over an extended period is desirable for printing on such fabric. The present specification provides a novel technique capable of maintaining high wash fastness over a long period when aqueous ink is used for printing on fabric.

The aqueous ink for inkjet recording disclosed herein is used to form images on a fabric. The aqueous ink includes a pigment, a binder, and a crosslinking agent. The binder includes a polyurethane resin having a polyester backbone. The crosslinking agent includes an oxazoline-group containing compound. A ratio of the binder amount to the pigment amount is 1.40 or greater. A ratio of the crosslinking agent amount to the binder amount is 0.15 or greater.

The above-described aqueous ink for inkjet recording may allow the binder to be suitably crosslinked, whereby the ester bonds in the binder become less susceptible to hydrolysis. In this way, a resin coating film may be formed which is suitable for maintaining high wash fastness over an extended period.

An ink set is also novel and useful. The ink set comprises the aforementioned aqueous ink for inkjet recording and a pretreatment liquid. The pretreatment liquid is applied to a fabric before forming an image on the fabric using the aqueous ink for inkjet recording.

An inkjet recording apparatus is also novel and useful. The inkjet recording apparatus includes an ink storage section, an ink ejection section, and the aqueous ink for inkjet recording stored in the ink storage section. The inkjet recording apparatus ejects the aqueous ink for inkjet recording from the ink ejection section to form an image on the fabric. The aqueous ink includes a pigment, a binder, and a crosslinking agent. The binder includes a polyurethane resin having a polyester backbone. The crosslinking agent includes an oxazoline-group containing compound. A ratio of the binder amount to the pigment amount is 1.40 or greater. A ratio of the crosslinking agent amount to the binder amount is 0.15 or greater.

An image forming method for forming an image on a fabric by an inkjet recording method is also novel and useful. The image forming method includes an image forming step, and a drying step. In the image forming step, an image is formed on the fabric using an aqueous ink for inkjet recording. In the drying step, the fabric with the formed image is heated to dry the aqueous ink. The aqueous ink includes a pigment, a binder, and a crosslinking agent. The binder includes a polyurethane resin having a polyester backbone. The crosslinking agent includes an oxazoline-group containing compound. A ratio of the binder amount to the pigment amount is 1.40 or greater. A ratio of the crosslinking agent amount to the binder amount is 0.15 or greater.

### BRIEF DESCRIPTION OF DRAWINGS

FIG. 1 illustrates a configuration of an inkjet recording apparatus.
FIG. 2 illustrates a schematic configuration of an ejection head mounted on a carriage.
FIG. 3 illustrates an example of a configuration in which a pretreatment liquid is applied prior to image formation by the inkjet recording apparatus.
FIG. 4 illustrates TABLE 1 of the present specification.
FIG. 5 illustrates TABLE 2 of the present specification.
FIG. 6 illustrates TABLE 3 of the present specification.
FIG. 7 illustrates TABLE 4 of the present specification.

### DETAIL DESCRIPTION

(Aqueous Ink for Inkjet Recording) An embodiment of aqueous ink for inkjet recording disclosed in this specification will be described. Hereinafter, the aqueous ink for inkjet recording may simply be referred to as aqueous ink. The aqueous ink is used to form an image on a fabric. Examples of the fabric may include those made of fiber materials, such as woven fabrics, non-woven fabrics, and knitted fabrics. Examples of the fiber materials may include natural fibers and synthetic fibers. Examples of natural fibers may include cotton, linen, wool, and silk. Examples of synthetic fibers include rayon, vinylon, nylon, acrylic, polyurethane, polyester, and acetate. The fabric may also be a blended woven fabric or blended non-woven fabric made from two or more selected from the above-mentioned fiber materials. The aqueous ink includes a pigment, a binder, and a crosslinking agent.

The pigment is not particularly limited. Examples of the pigment may include carbon black, inorganic pigments, and organic pigments. Examples of carbon black may include furnace black, lamp black, acetylene black, and channel black. Examples of inorganic pigments may include titanium oxide, iron oxide-based inorganic pigments, and carbon black-based inorganic pigments. Examples of organic pigments may include azo pigments such as azo lakes, insoluble azo pigments, condensed azo pigments, and chelate azo pigments; polycyclic pigments such as phthalocyanine pigments, perylene and perinone pigments, anthraquinone pigments, quinacridone pigments, dioxazine pigments, thioindigo pigments, isoindolinone pigments, and quinophthalone pigments; dye lake pigments such as basic dye-type lake pigments and acid dye-type lake pigments; nitro pigments; nitroso pigments; aniline black daylight fluorescent pigments. Other pigments may also be used as long as they are dispersible in an aqueous phase. Specific examples of these pigments may include C.I. Pigment Black 1, 6, and 7; C.I. Pigment Yellow 1, 2, 3, 12, 13, 14, 15, 16, 17, 55, 74, 78, 150, 151, 154, 155, 180, 185, and 194; C.I. Pigment Orange 31 and 43; C.I. Pigment Red 2, 3, 5, 6, 7, 12, 15, 16, 48, 48:1, 53:1, 57, 57:1, 112, 122, 123, 139, 144, 146, 149, 150, 166, 168, 175, 176, 177, 178, 184, 185, 190, 202, 209, 221, 222, 224, and 238; C.I. Pigment Violet 19 and 196; C.I. Pigment Blue 1, 2, 3, 15, 15:1, 15:2, 15:3, 15:4, 16, 22, and 60; C.I. Pigment Green 7 and 36; and solid solutions of these pigments. The aqueous ink may include a pigment dispersed in water using a dispersant. Examples of the dispersant may include general polymer dispersants, which may be prepared in-house. Examples of the polymer dispersants may include pigment-dispersing resins and resin dispersants. In the aqueous ink, the pigment may also be encapsulated by a polymer.

Examples of a method for dispersing a pigment using a pigment-dispersing resin may include dispersing the pigment with a dispersing device. The dispersing device used for pigment dispersion is not particularly limited. Examples of the dispersing device may include general dispersing device such as a ball mill, a roll mill, and a sand mill.

The pigment may be a self-dispersing pigment. The self-dispersing pigment may be one that can be dispersed in water without using a dispersant, as hydrophilic functional groups such as carbonyl groups, hydroxyl groups, carboxylic acid groups, sulfonic acid groups, phosphate groups, and at least one of their salts are introduced into the pigment particles either directly or via another group through chemical bonding.

The pigment may be used alone or in combination with two or more types. Pigment solid amount, i.e., the solid amount of the pigment relative to the total amount of the aqueous ink, is not particularly limited and can be determined as appropriate based on the desired optical density or chroma. The range of the pigment solid amount may be 0.10 wt% or greater and 20.00 wt% or less, 0.50 wt% or greater and 15.00 wt% or less, 1.00 wt% or greater and 10.00 wt% or less, or 2.00 wt% or greater and 8.00 wt% or less. The pigment solid amount refers to the weight of the pigment only and does not include the weight of resin dispersants and other components. In other words, the pigment solid amount is calculated based on the effective ingredient amount.

(Binder) The binder is blended to improve the fixation of the pigment on the fabric and the rubbing fastness, by forming a resin coating film on the fabric. The binder may be blended in the form of an emulsion in the aqueous ink and may be dispersed in the form of resin particles in the aqueous ink. The binder includes a polyurethane resin having a polyester backbone.

A polyurethane resin having a polyester backbone may be obtained by reacting a polyol component and a polyisocyanate component, optionally in the presence of a chain extender, a chain terminator, and a urethanization catalyst, using known methods. The polyol component may include a polyester polyol having a polyester backbone within its molecular structure.

The polyester polyol may be one or more selected from a polyester polyol obtained by polycondensation of a component including a polycarboxylic acid or an esterifiable derivative thereof with a component including a polyol; a polyester polyol obtained by ring-opening polymerization of a cyclic ester using a component including a polyol as an initiator; and a polyester polyol obtained by copolymerization of the above.

The polycarboxylic acid may be any compound having two or more carboxyl groups. Examples of polycarboxylic acids may include dicarboxylic acids and tricarboxylic acids. The polycarboxylic acid may be one or more selected from aromatic polycarboxylic acids, aliphatic polycarboxylic acids, and cycloalipatic polycarboxylic acids. Furthermore, the polycarboxylic acid may be one or more selected from saturated polycarboxylic acids and unsaturated polycarboxylic acids. The polycarboxylic acid may also be in the form of an anhydride.

Examples of esterifiable derivatives of polycarboxylic acids may include esters obtained by esterification of polycarboxylic acids with one or more aliphatic alcohols having 1 to 4 carbon atoms and/or one or more polyvalent alcohols having 1 to 4 carbon atoms. These esters are capable of forming polyesters through reaction with polyols.

Examples of aromatic polycarboxylic acids may include one or more selected from phthalic acid, isophthalic acid, terephthalic acid, trimellitic acid, halogenated phthalic acids such as tetrachlorophthalic acid and tetrabromophthalic acid, phthalic acid monosulfonate, isophthalic acid monosulfonate, terephthalic acid monosulfonate, and esterifiable derivatives thereof.

Examples of aliphatic polycarboxylic acids may include one or more selected from oxalic acid, malonic acid, succinic acid, glutaric acid, adipic acid, pimelic acid, suberic acid, azelaic acid, sebacic acid, undecanedioic acid, dodecanedioic acid, polymeric fatty acids, maleic acid, fumaric acid, itaconic acid, and esterifiable derivatives thereof.

Examples of cycloalipatic polycarboxylic acids may include one or more selected from 1,2-cyclobutanedicarboxylic acid, 1,3-cyclobutanedicarboxylic acid, 1,2-cyclopentanedicarboxylic acid, 1,3-cyclopentanedicarboxylic acid, hexahydrophthalic acid, 1,3-cyclohexanedicarboxylic acid, 1,4-cyclohexanedicarboxylic acid, 4-methylhexahydrophthalic acid, tricyclodecanedicarboxylic acid, tetrahydrophthalic acid, and 4-methyltetrahydrophthalic acid, and esterifiable derivatives thereof. The polycarboxylic acid may be in the cis form, the transform, or a mixture of both.

The component containing one or more of a polycarboxylic acid or an esterifiable derivative thereof may also include a monocarboxylic acid. Examples of monocarboxylic acids may include one or more selected from acetic acid, propionic acid, benzoic acid, tert-butylbenzoic acid, lauric acid, isononanoic acid, fatty acids derived from natural oils, acrylic acid, methacrylic acid, and crotonic acid.

Examples of polyols may include aromatic polyols, aliphatic polyols, and cycloalipatic polyols. The polyol may be either a saturated polyol or an unsaturated polyol. The polyol may include two or more hydroxyl groups, such as diols and triols.

Examples of diols include one or more selected from ethylene glycol, 1,2-propanediol, 1,3-propanediol, 1,2-butanediol, 1,3-butanediol, 1,4-butanediol, 1,2-pentanediol, 1,3-pentanediol, 1,4-pentanediol, 1,5-pentanediol, 1,2-hexanediol, 1,3-hexanediol, 1,4-hexanediol, 1,5-hexanediol, 1,6-hexanediol, neopentyl glycol, diethylene glycol, 3-methyl-1,5-pentanediol, alkanediols, triethylene glycol, propylene glycol, dipropylene glycol, 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, trimethylpentanediol, ethylbutylpropanediol, diethyloctanediol, 2-butyl-2-ethyl-1,3-propanediol, 2-butyl-2-methyl-1,3-propanediol, 2-phenyl-2-methyl-1,3-propanediol, 2-propyl-2-ethyl-1,3-propanediol, 2-di-tert-butyl-1,3-propanediol, 2-butyl-2-propyl-1,3-propanediol, 1-dihydroxymethyl-bicyclo[2.2.1]heptane, 2,2-diethyl-1,3-propanediol, 2,2-dipropyl-1,3-propanediol, 2-cyclohexyl-2-methyl-1,3-propanediol, 2,5-dimethyl-2,5-hexanediol, 2,5-diethyl-2,5-hexanediol, 2-ethyl-5-methyl-2,5-hexanediol, 2,4-dimethyl-2,4-pentanediol, 2,3-dimethyl-2,3-butanediol, 1,4-(2'-hydroxypropyl)benzene, 1,4-dihydroxy-2-butene, 2,6-dimethyl-1-octene-3,8-diol, bis(hydroxyethoxy)benzene, xylylene glycol, bis(2-hydroxyethylene)terephthalate, bisphenol A, bisphenol F, hydrogenated bisphenol A, and 1,3-(2'-hydroxypropyl)benzene.

Examples of triols may include one or more selected from trimethylolethane, trimethylolpropane, and glycerin.

The component containing a polyol may also include a monoalcohol. The monoalcohol is a compound having one hydroxyl group, such as alcohols and phenols. Specific examples of monoalcohols may include one or more selected from ethanol, propanol, 1-butanol, 2-butanol, tert-butyl alcohol, amyl alcohol, hexanol, aliphatic alcohols, allyl alcohol, and phenol.

The polyisocyanate is a compound having two or more isocyanate groups, or a derivative thereof. The polyisocyanates may be diisocyanates or triisocyanates. Examples of the polyisocyanate may be one or more selected from aliphatic polyisocyanates, cycloalipatic polyisocyanates, aromatic polyisocyanates, aromatic-aliphatic polyisocyanates, and aromatic-cycloalipatic polyisocyanates. The polyisocyanate may also be blocked with a blocking agent. Derivatives of polyisocyanates may include oligomerized or modified forms such as adducts, carbodiimides, allophanates, uretdiones, isocyanurates, biurets, uretoimines, dimers, trimers, pentamers, heptamers, and the like.

Examples of aliphatic polyisocyanate may include one or more selected from ethylene diisocyanate, trimethylene diisocyanate, tetramethylene diisocyanate, pentamethylene diisocyanate, 1,6-hexamethylene diisocyanate (HDI), ethylethylene diisocyanate, heptamethylene diisocyanate, dodecamethylene diisocyanate, 1,6,11-undecane triisocyanate, 2,2,4-trimethylhexamethylene diisocyanate, 2,4,4-trimethylhexamethylene diisocyanate, lysine diisocyanate (2,6-diisocyanatomethylcaproate), bis(2-isocyanatoethyl) fumarate, bis(2-isocyanatoethyl) carbonate, and 2-isocyanatoethyl-2,6-diisocyanatohexanoate.

Examples of cycloaliphatic polyisocyanate may include one or more selected from isophorone diisocyanate (IPDI), 4,4'-dicyclohexylmethane diisocyanate (hydrogenated MDI), hydrogenated xylylene diisocyanate, hydrogenated toluene diisocyanate, cyclobutane diisocyanate, cyclopentane diisocyanate, 1,4-cyclohexane diisocyanate, 1,3-cyclohexane diisocyanate, methylcyclohexylene diisocyanate, bis(2-isocyanatoethyl)-4-cyclohexene-1,2-dicarboxylate, 2,5-norbornane diisocyanate, 2,6-norbornane diisocyanate, and 2-heptyl-3,4-bis(9-isocyanatononyl)-1-pentyl-cyclohexane.

Examples of aromatic polyisocyanate may include one or more selected from 2,4-toluene diisocyanate, 2,6-toluene diisocyanate, 4,4'-diphenylmethane diisocyanate, p-phenylenediisocyanate, m-phenylenediisocyanate, 1,5-naphthylenediisocyanate, 3,3'-dimethyldiphenyl-4,4'-diisocyanate, dianisidine diisocyanate, 4,4'-toluidine diisocyanate, 4,4'-diphenyl ether diisocyanate, triphenylmethane triisocyanate, 1,3,5-triisocyanatobenzene, 2,4,6-triisocyanatotoluene, dimethyl triphenylmethane tetra isocyanate, and polymethylene polyphenyl polyisocyanate (crude MDI, polymetric MDI), crude toluene diisocyanate (crude TDI).

Examples of aromatic-aliphatic polyisocyanate may include one or more selected from 1,3-xylylene diisocyanate, 1,4-xylylene diisocyanate, and tetramethylxylylene diisocyanate.

Those conventionally employed in the production of polyurethane may be used as chain extender, urethanization catalyst, and chain terminator.

Commercially available products may be used as the polyurethane resin having a polyester backbone. Examples of such commercial products may include TAKELAC^{®} W-5030 and TAKELAC W-5130 from Mitsui Chemicals, Inc.; SUPERFLEX^{®} 126, SUPERFLEX 150, SUPERFLEX 150HS, SUPERFLEX 170, SUPERFLEX 210, SUPERFLEX 300, SUPERFLEX 500M, SUPERFLEX 620, SUPERFLEX 740, SUPERFLEX 820, SUPERFLEX 830HS, SUPERFLEX 860, and SUPERFLEX E-2000 from by DKS Co. Ltd.; Impranil^{®} DLP-R, Impranil DLN-W50, and Impranil DLP1380 from Sumika Covestro Urethane Company, Ltd.; and NeoRez^{®} R9330, NeoRez R9679, NeoRez R9637, and NeoRez R972" from DSM. These binders may be used alone or in combination of two or more.

An amount of the binder may be appropriately adjusted according to an amount of the pigment described above. Specifically, a ratio of the binder amount to the pigment amount, on a solids basis, may be preferably 1.40 or greater. The lower limit of this ratio may be 1.40 or greater, and may be 1.50 or greater, 1.60 or greater, 1.70 or greater, or 1.80 or greater. The upper limit of the ratio may not particularly be limited, and may be 5.00 or less, 4.00 or less, 3.50 or less, 3.00 or less, or 2.80 or less, on a solids basis. When the ratio is 1.4 or greater, a sufficient amount of binder can form a suitable resin coating film, thereby allowing the pigment to be fixed onto the fabric.

An amount of the binder in the total amount of the aqueous ink is not particularly limited. The lower limit of the binder amount, on a solids basis, may be 1.00 wt% or greater, 2.00 wt% or greater, 2.50 wt% or greater, 3.00 wt% or greater, or 3.50 wt% or greater. The upper limit of the binder amount, on a solids basis, may be 15.00 wt% or less, 10.00 wt% or less, 9.00 wt% or less, 8.00 wt% or less, or 7.00 wt% or less. A range of the binder amount may be set by appropriately combining the above lower and upper limits. For example, a range of the binder amount may be 1.00 wt% or greater and 15.00 wt% or less, 2.00 wt% or greater and 10.00 wt% or less, 2.50 wt% or greater and 9.00 wt% or less, 3.00 wt% or greater and 8.00 wt% or less, or 3.50 wt% or greater and 7.00 wt% or less, on a solids basis. When the binder amount falls within the above range, the pigment can be suitably fixed to the fabric, and a resin coating film with high rubbing fastness can be ensured.

The aqueous ink may contain, as a binder, not only a polyurethane resin having a polyester backbone but also other water-dispersible resins. Examples of water-dispersible resins may include acrylic resins, polycarbonate resins, styrene-based resins, polyester resins, and polyurethane resins having other backbones.

The crosslinking agent is water-soluble and incorporated to impart crosslinking properties to the binder. The crosslinking agent includes an oxazoline group-containing compound. The oxazoline group-containing compound is a compound having two or more oxazoline groups in its molecule. Such a compound can suitably crosslink the binder containing the above-mentioned polyurethane resin having a polyester backbone, thereby forming a sufficient resin coating film and resulting high washing fastness.

Examples of oxazoline group-containing compounds may include 2,2'-bis(2-oxazoline), 2,2'-methylene-bis(2-oxazoline), 2,2'-ethylene-bis(2-oxazoline), 2,2'-trimethylene-bis(2-oxazoline), 2,2'-tetramethylene-bis(2-oxazoline), 2,2'-hexamethylene-bis(2-oxazoline), 2,2'-octamethylene-bis(2-oxazoline), 2,2'-ethylene-bis(4,4'-dimethyl-2-oxazoline), 2,2'-p-phenylene-bis(2-oxazoline), 2,2'-m-phenylene-bis(2-oxazoline), 2,2'-m-phenylene-bis(4,4'-dimethyl-2-oxazoline), bis(2-oxazolinylcyclohexane) sulfide, bis(2-oxazolinylnorbornane) sulfide, and oxazoline group-containing polymers.

Among the above-mentioned oxazoline group-containing compounds, water-soluble oxazoline group-containing compounds may be preferred in view of superior crosslinking performance. In addition, oxazoline group-containing polymers may also be preferred. Oxazoline-containing polymers can be produced using conventional methods known in the art. For example, one method involves polymerizing one or more types of addition-polymerizable oxazolines or polymerizing an addition-polymerizable oxazoline and a monomer component including a monomer co-polymerizable with the addition-polymerizable oxazoline. Co-polymerizable monomers may be preferably those that do not have functional groups that react with oxazoline groups and can co-polymerize with addition-polymerizable oxazolines. For instance, monomers containing ethylenically unsaturated double bonds that lack functional groups reacting with oxazoline groups can be cited. Examples may include vinyl monomers such as vinyl acetate, vinyl chloride, acrylonitrile, acrylamide, and vinyl benzoate; (meth)acrylic monomers such as (meth)acrylate esters; styrene monomers such as styrene, α-methylstyrene, and chloromethylstyrene; and olefin monomers such as ethylene and propylene.

Examples of addition-polymerizable oxazoline monomers may include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline.

Examples of water-soluble oxazoline group-containing polymers may include polymers with acrylic or acrylic-styrene copolymer backbones that contain oxazoline groups in the side chains.

Commercially available oxazoline group-containing compounds may be used. Examples include EPOCROS^{®} WS-500, EPOCROS WS-700, EPOCROS K-2010E, EPOCROS K-2020E, and EPOCROS K-2035E, from Nippon Shokubai Co., Ltd. Among these, water-soluble oxazoline group-containing compounds may be preferrable for enhancing reactivity. Examples may include EPOCROS WS-500 and EPOCROS WS-700.

The aforementioned crosslinking agents may be used alone or in combination with two or more types. An amount of the crosslinking agents is appropriately adjusted according to the content of the aforementioned binder. Specifically, a ratio of the crosslinking agent amount to the binder amount, on a solids basis, may be 0.15 or greater. The lower limit of the ratio, on a solids basis, may be 0.15 or greater, and may be 0.16 or greater, 0.17 or greater, 0.18 or greater, or 0.19 or greater. The upper limit of the ratio is not particularly limited. The upper limit of the ratio, on a solids basis, may be 1.00 or less, 0.80 or less, 0.60 or less, 0.50 or less, or 0.40 or less. Since the binder containing the above-mentioned polyurethane resin having a polyester backbone is susceptible to hydrolysis of ester bonds under high temperature and high humidity conditions, it may be difficult to maintain high washing fastness over a long period of time. However, when the ratio is 0.15 or greater, a resin coating film that is less susceptible to hydrolysis can be formed, thereby keeping washing fastness over an extended period.

The crosslinking agent amount relative to the total amount of the aqueous ink is not particularly limited. The lower limit of the crosslinking agent amount, on a solids basis, may be, 0.30 wt% or greater, 0.50 wt% or greater, 0.70 wt% or greater, 0.80 wt% or greater, or 0.90 wt% or greater. The upper limit of the crosslinking agent amount may be, 10.00 wt% or less, 5.00 wt% or less, 4.00 wt% or less, 3.00 wt% or less, or 2.40 wt% or less. The range of the crosslinking agent amount may be set by appropriately combining the above lower and upper limits. The range of the crosslinking agent amount may be, on a solids basis, 0.30 wt% or greater and 10.00 wt% or less, 0.50 wt% or greater and 5.00 wt% or less, 0.70 wt% or greater and 4.00 wt% or less, 0.80 wt% or greater and 3.00 wt% or less, or 0.90 wt% or greater and 2.40 wt% or less.

The aqueous ink may include, in addition to oxazoline group-containing compounds, other crosslinking agents. Examples of such other crosslinking agents may include isocyanate group-containing compounds, carbodiimide compounds, aziridine group-containing compounds, epoxy group-containing compounds, and water-based crosslinking agents obtained by imparting hydrophilic segments to polycarbodiimide resins.

(Other Components) The aqueous ink may further include other components such as water, wax particles, water-soluble organic solvents, and surfactants.

(Water) Water may preferably be ion-exchanged water or purified water. An amount of water relative to the total amount of the aqueous ink may be appropriately determined according to the desired ink properties. The range of the water amount may be 15.00 wt% or greater and 95.00 wt% or less, 35.00 wt% or greater and 85.00 wt% or less, or 50.00 wt% or greater and 80.00 wt% or less. The water amount may also be regarded as the remainder of other components.

(Wax Particles) Wax particles are incorporated to improve the rubbing fastness of the resin coating film. The wax particles contain wax. The wax may be either natural wax or synthetic wax. The wax particles may also contain components other than wax. However, from the perspective of improving rubbing fastness, it may be preferable that an amount of the wax in the wax particles is 80.00 wt% or greater and 100 wt% or less. More preferably, the wax particles may consist entirely of wax.

Examples of natural waxes may include petroleum-based waxes such as paraffin wax and microcrystalline wax; lignite-based waxes such as montan wax; plant-based waxes such as carnauba wax and candelilla wax; and animal-based or plant-based waxes such as beeswax and lanolin. Examples of synthetic waxes may include polyethylene wax, polypropylene wax, oxidized polyethylene wax, polyalkylene wax, oxidized polyalkylene wax, and silicone wax. Among these, polyethylene wax and paraffin wax may be preferred. The wax particles may be in the form of a wax emulsion. A wax emulsion typically consists of wax particles and a dispersion medium, wherein the wax particles are dispersed with a specific particle size rather than being dissolved in the dispersion medium.

Commercially available waxes may be used. Examples may include CERAFLOUR^{®} 925, CERAFLOUR 929, CERAFLOUR 950, CERAFLOUR 991, AQUACER^{®} 497, AQUACER 498, AQUACER 507, AQUACER 515, AQUACER 526, AQUACER 531, AQUACER 537, AQUACER 539, AQUACER 552, AQUACER 593, AQUACER 1547, AQUAMAT^{®} 208, AQUAMAT 263, and AQUAMAT 272 from BYK-Chemie; CHEMIPEARL^{®} W100, CHEMIPEARL W200, CHEMIPEARL W300, CHEMIPEARL W400, CHEMIPEARL W500, CHEMIPEARL W700, CHEMIPEARL W800, and CHEMIPEARL W900 from Mitsui Chemicals, Inc.; and HITECH E-7100S, HITECH E-8237, HITECH E-6314, HITECH E-6700, and HITECH E-8010 from Toho Chemical Industry Co., Ltd. Among these, anionic waxes may be preferred. From another perspective, oxidized high-density polyethylene wax and paraffin wax may also be preferred. Specific examples may include AQUACER 1547, AQUACER 531 and AQUACER 537.

The melting point (mp) of the wax particles is not particularly limited. The melting point of the wax particles may be at a temperature that allows the wax particles to melt adequately when the aqueous ink applied to the fabric is subjected to heat drying. The melting point of the wax particles may be 70 °C or greater and 160 °C or less, 90 °C or greater and 150 °C or less, or 100 °C or greater and 140 °C or less.

The wax particles may be used alone or in combination of two or more types. An amount of the wax particles relative to the total amount of the aqueous ink is not particularly limited. The lower limit of the wax particles amount, on a solids basis, may be 0.10 wt% or greater, 0.20 wt% or greater, 0.25 wt% or greater, or 0.30 wt% or greater. The upper limit of the wax particles amount, on a solids basis, may be 5.00 wt% or less, 4.00 wt% or less, 3.00 wt% or less, or 2.00 wt% or less. The range of the wax particles amount may be set by appropriately combining the above upper and lower limits. For example, the range of the wax particles amount, on a solids basis, may be 0.10 wt% or greater and 5.00 wt% or less, 0.20 and 4.00 wt% or less, 0.25 wt% or greater and 3.00 wt% or less, or 0.30 wt% or greater and 2.00 wt% or less. Favorable abrasion resistance can be imparted to the resin coating film when the amount of wax particles falls within the aforementioned range.

(Water-Soluble Organic Solvent) Examples of water-soluble organic solvents may include humectants and penetrants.

The humectant is not particularly limited. Examples of the humectant may include lower alcohols such as methyl alcohol, ethyl alcohol, n-propyl alcohol, isopropyl alcohol, n-butyl alcohol, sec-butyl alcohol, and tert-butyl alcohol; amides such as dimethylformamide and dimethylacetamide; ketones such as acetone; ketoalcohols such as diacetone alcohol; ethers such as tetrahydrofuran and dioxane; polyethers such as polyalkylene glycols; polyhydric alcohols such as alkylene glycols, glycerin, trimethylolpropane, and trimethylolethane; 2-pyrrolidone; N-methyl-2-pyrrolidone; 1,3-dimethyl-2-imidazolidinone; and the like. Examples of polyalkylene glycols may include polyethylene glycol and polypropylene glycol. Examples of alkylene glycols may include ethylene glycol, propylene glycol, butylene glycol, diethylene glycol, triethylene glycol, dipropylene glycol, tripropylene glycol, thioglycol, and hexylene glycol. These humectants may be used alone or in combination of two or more types. Among these, polyethylene glycol may be preferably used, particularly one having a polymerization degree of 4 or greater.

The humectant may be used alone or in combination of two or more types. When the aqueous ink contains a humectant, an amount of the humectant relative to the total amount of the aqueous ink is not particularly limited. The range of the humectant amount may be 1.00 wt% or greater and 95.00 wt% or less, 5.00 wt% or greater and 80.00 wt% or less, or 10.00 wt% or greater and 50.00 wt% or less. The humectant amount within the above range may prevent the ink from drying during storage and improve the storage stability of the aqueous ink. By setting a ratio of the amount of polyethylene glycol to the total amount of humectant to 0.40 or greater, film formation can be further promoted. Accordingly, a sufficient resin coating film can be formed, and high washing fastness can be obtained.

Examples of penetrants may include glycol ethers. Specific examples of glycol ethers include ethylene glycol methyl ether, ethylene glycol ethyl ether, ethylene glycol-n-propyl ether, diethylene glycol methyl ether, diethylene glycol ethyl ether, diethylene glycol-n-propyl ether, diethylene glycol-n-butyl ether, diethylene glycol-n-hexyl ether, triethylene glycol methyl ether, triethylene glycol ethyl ether, triethylene glycol-n-propyl ether, triethylene glycol-n-butyl ether, propylene glycol methyl ether, propylene glycol ethyl ether, propylene glycol-n-propyl ether, propylene glycol-n-butyl ether, dipropylene glycol methyl ether, dipropylene glycol ethyl ether, dipropylene glycol-n-propyl ether, dipropylene glycol-n-butyl ether, tripropylene glycol methyl ether, tripropylene glycol ethyl ether, tripropylene glycol-n-propyl ether, and tripropylene glycol-n-butyl ether. Among these, triethylene glycol-n-butyl ether may be preferred.

The penetrant may be used alone or in combination of two or more types. When the aqueous ink contains a penetrant, an amount of the penetrant relative to the total amount of the aqueous ink is not particularly limited. The range of the penetrant amount may be 0.10 wt% or greater and 20.00 wt% or less, 0.50 wt% or greater and 10.00 wt% or less, or 1.00 wt% or greater and 5.00 wt% or less.

(Surfactants) The Surfactant is not particularly limited and may be appropriately selected according to the intended purpose. Examples of surfactants may include anionic surfactants, nonionic surfactants, cationic surfactants, amphoteric surfactants, silicone-based surfactants, and fluorine-based surfactants.

Examples of anionic surfactants may include alkylsulfocarboxylate salts, α-olefin sulfonate salts, polyoxyethylene alkyl ether acetate salts, polyoxyethylene alkyl ether sulfate salts, N-acyl amino acids or their salts, N-acylmethyltaurine salts, alkyl sulfate polyoxyalkyl ether sulfate salts, alkyl sulfate polyoxyethylene alkyl ether phosphate salts, rosin soap, castor oil sulfate ester salts, lauryl alcohol sulfate ester salts, alkylphenol-type phosphate esters, alkyl-type phosphate esters, alkylaryl sulfonate salts, diethyl sulfosuccinate salts, diethylhexyl sulfosuccinate salts, and dioctyl sulfosuccinate salts.

Examples of nonionic surfactants may include polyols, glycol ethers, polyoxyethylene alkyl ethers, polyoxyethylene alkyl esters, polyoxyethylene sorbitan fatty acid esters, polyoxyethylene alkylphenyl ethers, polyoxyethylene alkylamines, polyoxyethylene alkylamides, and acetylene glycols. Commercially available nonionic surfactants may be used. Examples of commercially available products may include OLFINE^{®} E1004, OLFINE E1008, and OLFINE E1010 from Nisshin Chemical Industries Co., Ltd.; SURFYNOL^{®} 440, SURFYNOL 465, and SURFYNOL 485 from Air Products and Chemicals, Inc.; and Acetylenol^{™} E40 and Acetylenol E100 from Kawaken Fine Chemicals Co., Ltd.

Examples of silicone-based surfactants include polyether-modified siloxanes and polyether-modified polydimethylsiloxanes. Commercially available silicone-based surfactants may be used. Examples may include DYNOL^{™} 960 and DYNOL 980 from Air Products and Chemicals, Inc.; SILFACE^{®} SAG002, SILFACE SAG005, and SILFACE SAG503A from Nisshin Chemical Industries Co., Ltd.; BYK^{®}-345, BYK-347, BYK-348, BYK-349, BYK-3420, BYK-3455, BYK-3456, LP-X23288, LP-X23289, and LP-X23347 from BYK-Chemie; and TEGO^{®} Twin 4000 and TEGO Wet KL245 from Evonik Tego Chemie.

Examples of fluorine-based surfactants may include perfluoroalkyl sulfonic acid compounds, perfluoroalkyl carboxylic acid compounds, perfluoroalkyl phosphate ester compounds, perfluoroalkyl ethylene oxide adducts, and polyoxyalkylene ether polymer compounds having perfluoroalkyl ether groups as side chains.

The surfactant may be used alone or in combination of two or more types. When the aqueous ink contains a surfactant, an amount of the surfactant relative to the total amount of the aqueous ink is not particularly limited. The range of the surfactant amount may be 0.10 wt% or greater and 20.00 wt% or less, 0.15 wt% or greater and 10.00 wt% or less, or 0.20 wt% or greater and 5.00 wt% or less. When the surfactant amount falls within the above range, the aqueous ink may exhibit suitable surface-active properties.

The aqueous ink may further include, as needed, conventionally known additives. Examples of such additives may include pH adjusters, viscosity modifiers, and preservatives. Examples of viscosity modifiers may include polyvinyl alcohol, cellulose, and water-soluble resins.

The aqueous ink may be prepared by uniformly mixing the pigment, binder, crosslinking agent, water, and other optional components using a conventionally known method, and then removing insoluble matter by filtration or similar method.

(Total amount of solid components of aqueous ink) As described above, the aqueous ink contains solid components derived from various ingredients. The storage stability of the aqueous ink can be improved by properly setting the total amount of solids relative to the total amount of the aqueous ink. In the present specification, the term "total amount of solids" refers to the combined amount of solids derived from the pigment, binder, crosslinking agent, and wax particles. The ratio of the total amount of solids to the total amount of the aqueous ink is not particularly limited. The lower limit of the total amount of solids relative to the total amount of the aqueous ink may be 5.00 wt% or greater, 5.50 wt% or greater, 6.00 wt% or greater, 7.20 wt% or greater, or 8.90 wt% or greater. The upper limit of the total amount of solids relative to the total amount of the aqueous ink may be 15.00 wt% or less, 14.00 wt% or less, 13.20 wt% or less, 12.70 wt% or less, or 11.90 wt% or less.

(Ink Set) Next, the ink set disclosed in this specification will be described. The ink set includes the above-described aqueous ink for inkjet recording and a pretreatment liquid.

(Pretreatment Liquid) The pretreatment liquid is applied to the fabric before forming an image using the inkjet recording aqueous ink. The pretreatment liquid may suppress the penetration of the pigment contained in the aqueous ink into the fabric. The pretreatment liquid may include a coagulant.

(Coagulant) The coagulant is incorporated to suppress bleeding of the aqueous ink and to improve pigment fixation and color development by promoting coagulation of components contained in the aqueous ink. Examples of the coagulant may include organic acids, cationic compounds, and polyvalent metal salts.

Examples of organic acids may include monocarboxylic acids, such as formic acid, acetic acid, propionic acid, butyric acid, benzoic acid, glycolic acid, lactic acid, salicylic acid, pyrrolecarboxylic acid, furan carboxylic acid, picolinic acid, nicotinic acid, thiophene carboxylic acid, levulinic acid, and coumaric acid, and their salts; dicarboxylic acids, such as oxalic acid, malonic acid, succinic acid, glutaric acid, adipic acid, maleic acid, fumaric acid, itaconic acid, sebacic acid, phthalic acid, malic acid, and tartaric acid, and their salts or acid salts; tricarboxylic acids, such as citric acid and trimellitic acid, and their salts or acid salts; and tetracarboxylic acids, such as pyromellitic acid, and their salts or acid salts.

Examples of cationic compounds may include cationic resins and cationic surfactants.

Examples of cationic resins may include resins having primary, secondary, or tertiary amine structures, and resins having quaternary ammonium salt structures. Specific examples may include resins having structures such as vinylamine, allylamine, vinylimidazole, vinylpyridine, dimethylaminoethyl methacrylate, ethyleneimine, guanidine, diallyldimethylammonium chloride, and alkylamine-epichlorohydrin condensates.

Examples of cationic surfactants may include quaternary ammonium salts, quaternary ammonium ions, primary, secondary, and tertiary amine salt-type compounds, alkylamine salts, dialkylamine salts, aliphatic amine salts, alkylpyridinium salts, imidazolinium salts, sulfonium salts, phosphonium salts, and onium salts. Specific examples of cationic surfactants other than quaternary ammonium salts and quaternary ammonium ions may include hydrochloride salts or acetate salts, such as laurylamine, coconut amine, and rosin amine; cetylpyridinium chloride, cetylpyridinium bromide, and dihydroxyethyl laurylamine.

Examples of polyvalent metal salts include aluminum chloride, aluminum bromide, aluminum sulfate, aluminum nitrate, aluminum acetate, barium chloride, barium bromide, barium iodide, barium oxide, barium nitrate, barium thiocyanate, calcium chloride, calcium bromide, calcium iodide, calcium nitrite, calcium nitrate, calcium dihydrogen phosphate, calcium thiocyanate, calcium lactate, calcium fumarate, calcium citrate, copper chloride, copper bromide, copper sulfate, copper nitrate, copper acetate, iron chloride, iron bromide, iron iodide, iron sulfate, iron nitrate, iron oxalate, iron lactate, iron fumarate, iron citrate, magnesium chloride, magnesium bromide, magnesium iodide, magnesium sulfate, manganese sulfate, manganese nitrate, manganese dihydrogen phosphate, manganese acetate, manganese salicylate, manganese benzoate, manganese lactate, nickel chloride, nickel bromide, nickel sulfate, nickel nitrate, nickel acetate, tin sulfate, titanium chloride, zinc chloride, zinc bromide, zinc sulfate, zinc nitrate, zinc thiocyanate, and zinc acetate.

The coagulant may be selected from the above and used alone or in combination of two or more types. An amount of the coagulant relative to the total amount of the pretreatment liquid is not particularly limited. The range of the coagulant amount may be 0.50 wt% or greater and 20.00 wt% or less, 1.00 wt% or greater and 20.00 wt% or less, or 1.00 wt% or greater and 15.00 wt% or less.

The pretreatment liquid may further contain additives such as solvents, pH adjusters, and preservatives, as needed.

(Inkjet Recording Apparatus) Next, with reference to the drawings, an embodiment of an inkjet recording apparatus 10 will be described. Hereinafter, the inkjet recording apparatus 10 may be simply referred to as a recording apparatus 10. The recording apparatus 10 ejects the inkjet recording aqueous ink toward a fabric in accordance with an inkjet recording method, thereby forming an image on the fabric. In the present embodiment, the recording apparatus 10 performs fabric printing on the fabric using the inkjet recording method. The recording apparatus 10 is used while being placed on a tabletop. However, in other embodiments, the recording apparatus 10 may be placed on a floor or a rack.

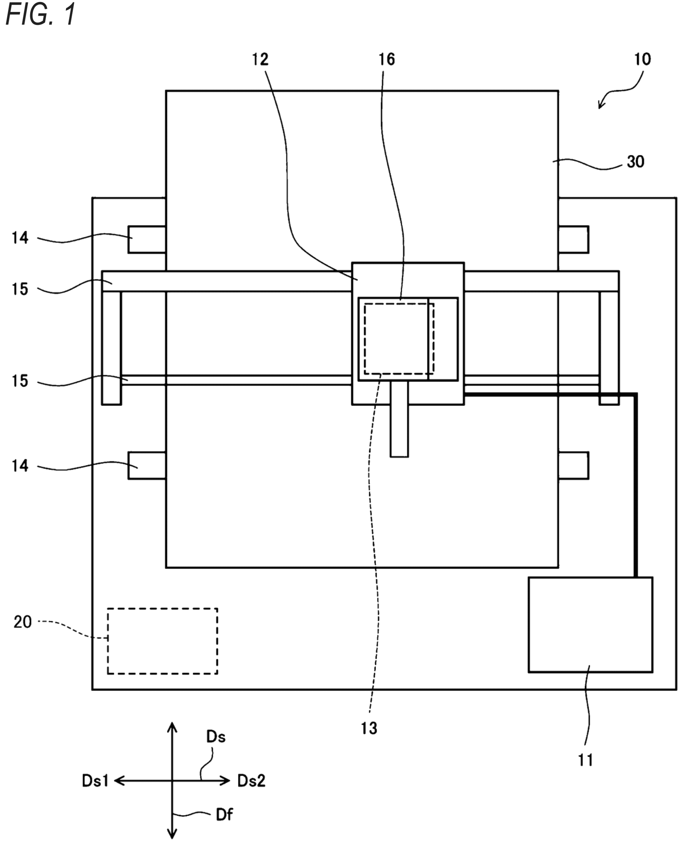

As shown in FIG. 1, the recording apparatus 10 includes a storage tank 11, a carriage 12, an ejection head 13, a pair of transport rollers 14, a pair of guide rails 15, sub-tanks 16, and a control unit 20. The control unit 20 is communicably connected to each component of the recording apparatus 10 and controls their operations. The control unit 20 is also communicably connected to a pretreatment liquid application device 22, which will be described later, and controls its operation. A fabric 30, which is the target for image formation, is placed on a platen of the recording apparatus 10.

The ejection head 13 is mounted on the carriage 12. The carriage 12 is supported by the pair of guide rails 15 and reciprocates along the guide rails 15 in a movement direction Ds. Accordingly, the ejection head 13 reciprocates in the movement direction Ds, which is perpendicular to the transport direction Df of the fabric.

The carriage 12 is equipped with multiple sub-tanks 16. Each sub-tank 16 is connected to a corresponding storage tank 11 via a tube for ink supply. In FIG. 1, the sub-tanks 16 are schematically illustrated as a single structural unit.

The pair of transport rollers 14 are arranged parallel to each other along the movement direction Ds. The transport rollers 14 rotate by driving a transport motor, thereby transporting the fabric 30 placed on the platen in the transport direction Df.

The storage tank 11 stores the aqueous ink. The storage tank 11 is connected to the ejection head 13 via a tube and a sub-tank 16. The storage tank 11 is provided for each type of aqueous ink. Although FIG. 1 schematically illustrates the storage tank 11 as a single structural unit, the recording apparatus 10 may include five storage tanks 11. These five storage tanks respectively store aqueous inks of white, black, yellow, cyan, and magenta colors.

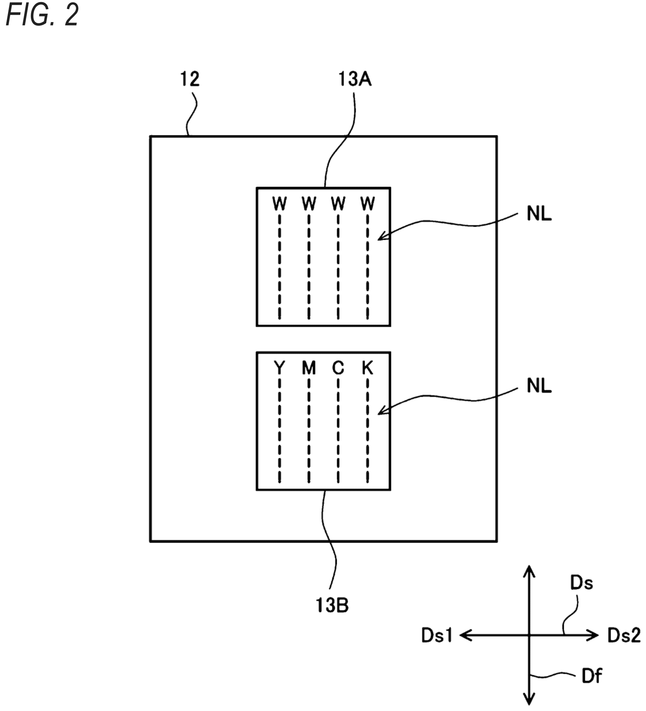

As shown in FIG. 2, the carriage 12 is equipped with two ejection heads 13A, 13B. The ejection heads 13A, 13B are arranged side by side along the transport direction Df. When recording an image on the fabric 30, the carriage 12 moves along the movement direction Ds, causing the ejection heads 13A, 13B to move together with the carriage 12. During this movement, the ejection heads 13A, 13B eject the aqueous ink onto the fabric 30, thereby forming an image on a recording surface of the fabric 30. The image recording process alternates between transporting the fabric 30 in the transport direction Df and ejecting aqueous ink while moving the ejection heads 13A, 13B.

The ejection head 13A ejects white ink. The ejection head 13A includes nozzle arrays NL for ejecting white ink, arranged along the transport direction Df. In the example shown in FIG. 2, the ejection head 13A includes four nozzle arrays NL for white ink, arranged at equal intervals along the movement direction Ds. The number of nozzle arrays NL for white ink is not particularly limited and may be two rows or even a single row.

The ejection head 13B ejects aqueous inks of yellow, magenta, cyan, and black. The ejection head 13B includes nozzle arrays NL for these inks such that each nozzle array is arranged along the transport direction Df. Each nozzle array NL is also arranged at equal intervals along the movement direction Ds.

In addition to the five storage tanks 11 for the above-mentioned ink colors, the recording apparatus 10 may further include an additional storage tank for a special color ink. In such a case, one of the nozzle arrays NL of the ejection head 13A may be used to eject the special color ink.

(Image Formation Method) Next, an image formation method using the inkjet recording method with the recording apparatus 10 will be described. The method includes a pretreatment step, a pretreatment liquid fixation step, an image formation step, and a drying step. The control unit 20 executes each step in response to a command input to the recording apparatus 10 from an external source. Upon receiving the command, the control unit 20 controls components, such as the pair of transport rollers 14, to transport the fabric 30.

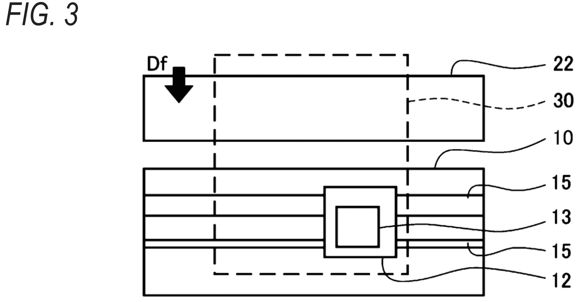

(Pretreatment Step) In the pretreatment step, the control unit 20 applies the pretreatment liquid to the recording surface of the fabric 30. This step is performed to suppress ink bleeding and improve pigment fixation and color development. The specific configuration for applying the pretreatment liquid to the fabric 30 is not particularly limited. For example, as shown in FIG. 3, the pretreatment liquid may be applied using a pretreatment liquid application device 22 that is separate from the recording apparatus 10. The control unit 20 controls the operation of the pretreatment liquid application device 22 to apply the pretreatment liquid to the recording surface of the fabric 30, as the fabric 30 passes through the pretreatment liquid application device 22.

The method of applying the pretreatment liquid to the fabric 30 is not particularly limited. Examples of application method may include spray coating, blade coating, roll coating, inkjet method, and immersion processing. Immersion processing refers to a method in which the fabric 30 is immersed in the pretreatment liquid and then squeezed using a mangle roll. From the viewpoint of continuous processing of pretreatment and image formation, inkjet application may be adopted.

In the pretreatment step, the pretreatment liquid is applied to an area of the fabric 30 where the image will be formed. The pretreatment liquid may be applied to the entire recording surface of the fabric 30 or only to a partial area including the image formation area. In the former case, spray coating, blade coating, roll coating, or immersion processing may be suitably used. In the latter case, inkjet application may be preferably used.

The recording apparatus 10 may also possess the functionality of the pretreatment liquid application device 22. That is, the recording apparatus 10 may be configured to apply the pretreatment liquid to the fabric 30. When the pretreatment liquid is applied by the inkjet method, an additional ejection head for pretreatment liquid may be provided on the carriage 12 of the recording apparatus 10.

(Pretreatment Liquid Fixation Step) In the pretreatment liquid fixation step, the control unit 20 dries the pretreatment liquid applied to the fabric 30, thereby fixing the pretreatment liquid to the recording surface of the fabric 30. The control unit 20 controls a drying device provided in the pretreatment liquid application device 22 to fix the pretreatment liquid to the recording surface of the fabric 30.

The method for drying the pretreatment liquid is not particularly limited. Examples of suitable drying methods may include a method of air drying, and a method of heating using various devices. Examples of commercially available devices for heating may include an iron, a heat press machine, a dryer, an oven, and a belt conveyor oven.

(Image Formation Step) In the image formation step, the control unit 20 ejects aqueous ink onto the recording surface of the transported fabric 30. By controlling the carriage 12 and piezoelectric elements or the like corresponding to each nozzle of the ejection head 13, the control unit 20 selectively ejects aqueous ink from each nozzle toward the fabric 30 passing beneath the ejection head 13. As a result, an image is formed on the recording surface of the fabric 30.

(Drying Step) In the drying step, the control unit 20 heats the fabric 30 to dry the aqueous ink applied thereto. Specifically, the control unit 20 controls a drying device provided in the recording apparatus 10 to dry the aqueous ink adhered to the recording surface of the fabric 30. The drying methods described in the pretreatment liquid fixation step may be used for drying the aqueous ink. In the drying step, the pigment can be more firmly fixed to the fibers of the fabric 30 by heating and drying the image-recorded fabric 30.

The heating temperature of the fabric 30 during the drying step is not particularly limited. The heating temperature may be set within a range of 80 °C to 200 °C, 100 °C to 190 °C, 110 °C to 185 °C, or 130 °C to 180 °C. The time for heating the same position of the fabric 30 during drying is not particularly limited, but may be within a range of 120 seconds to 600 seconds.

In the embodiment described above, the control unit 20 of the recording apparatus 10 controls the operation of the pretreatment liquid application device 22. However, a dedicated control unit for controlling the pretreatment liquid application device 22 may alternatively be included. Further, the pretreatment liquid fixation step may be omitted after the pretreatment step is performed, or both the pretreatment step and the pretreatment liquid fixation step may be omitted. That is, the image forming method disclosed in this specification may only need to include at least an image forming step and a drying step.

(Examples) Next, the aqueous ink disclosed in this specification will be described in detail through examples and comparative examples. However, the technology disclosed herein is not limited to these examples in any way.

(Preparation of Aqueous Ink in Example 1) 21.50 wt% of glycerin as a humectant, 3.00 wt% of triethylene glycol-n-butyl ether as a penetrant, 0.25 wt% of BYK-3420 as a surfactant, and 66.35 wt% of water were mixed. Subsequently, 4.50 wt% of TAKELAC W-5130 as a binder on a solids basis, 0.90 wt% of EPOCROS WS-700 as a crosslinking agent on a solids basis, 0.50 wt% of AQUACER 1547 as wax particles on a solids basis were added and mixed. Finally, 3.00 wt% of a black pigment dispersion as a pigment on a solids basis were added and mixed. The resulting mixture was filtered using a cellulose acetate-type membrane filter with pore size of 3.00 µm from Toyo Roshi Kaisha, Ltd., thereby obtaining the aqueous ink of Example 1.

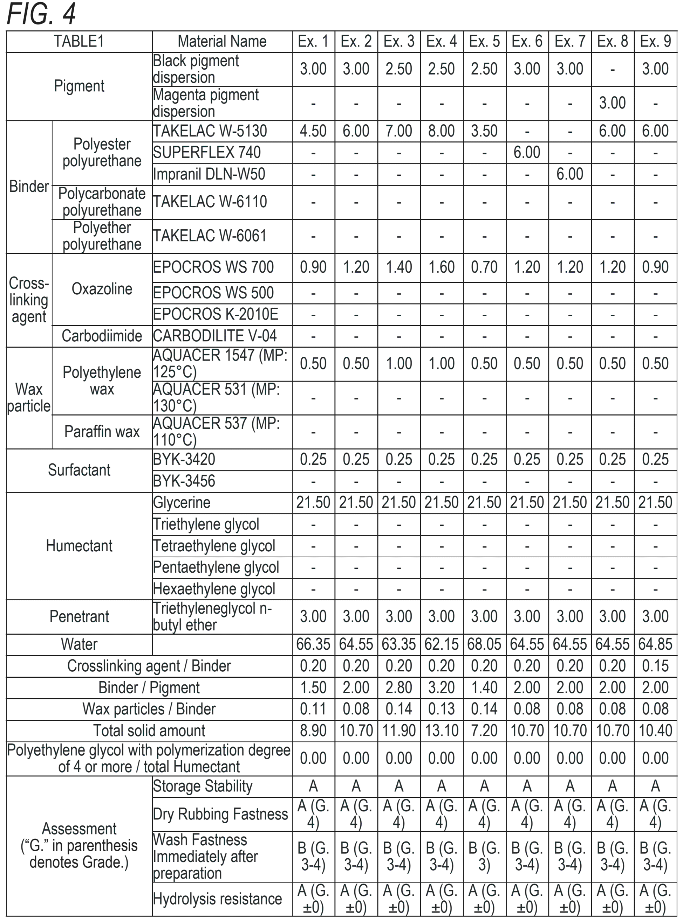

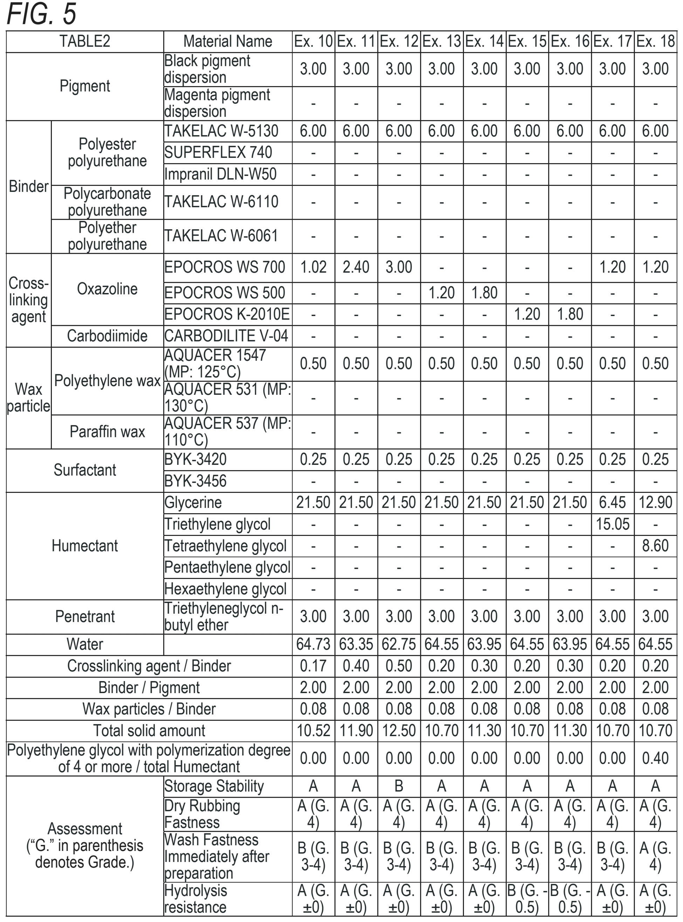

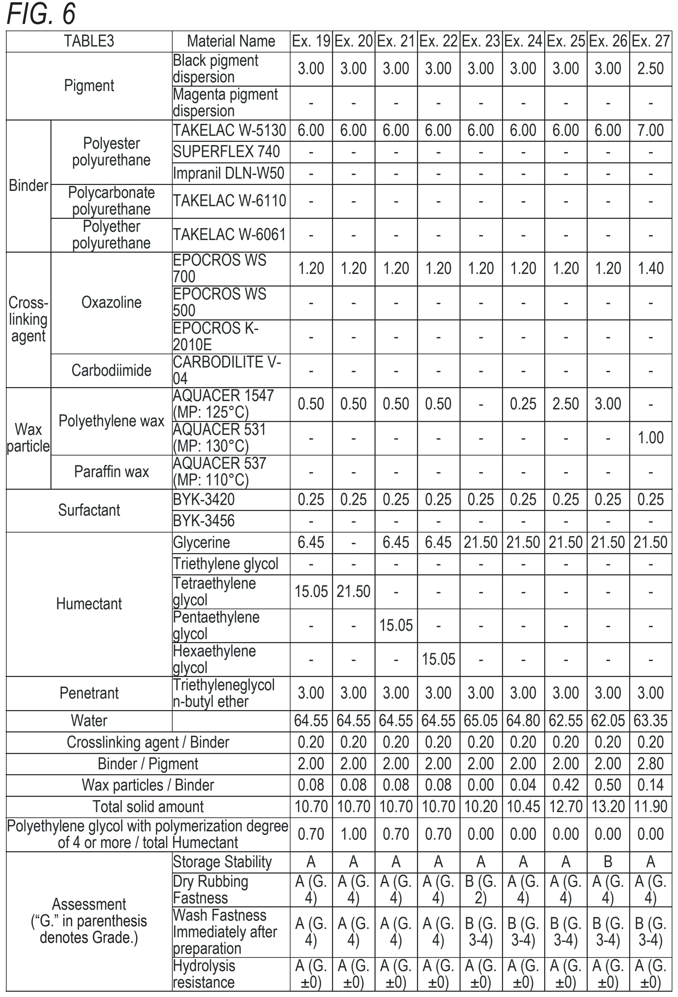

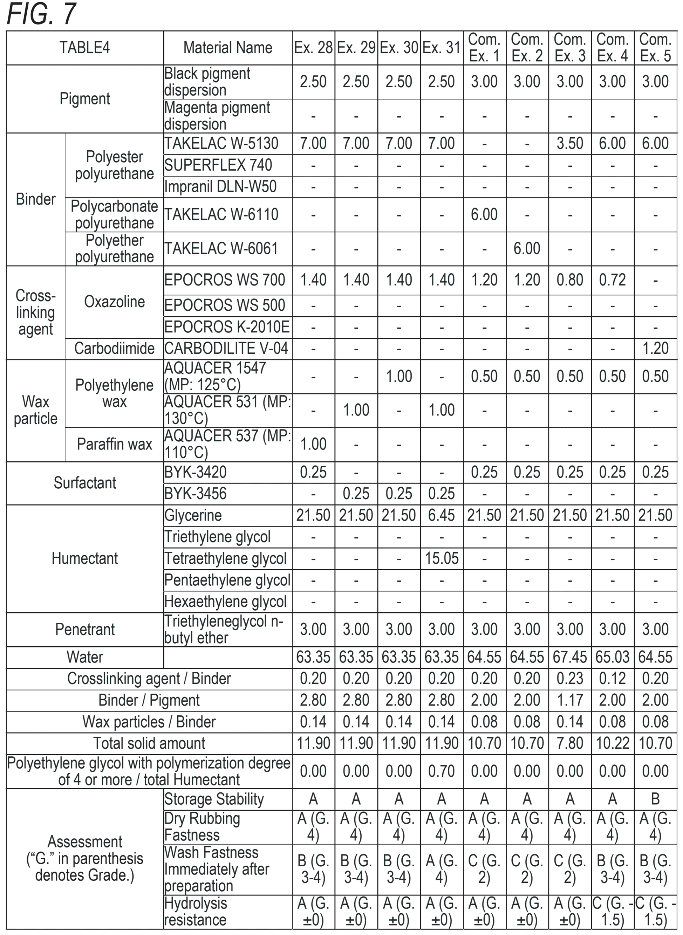

(Preparation of Aqueous Inks in Examples 2 to 31 and Comparative Examples 1 to 5) The aqueous inks in each example and comparative example were prepared using components specified in Tables 1 to 4 shown in FIGs. 4 to 7 and using the same procedure as in Example 1.

In Tables 1 to 4, the black pigment dispersion refers to an aqueous dispersion of carbon black, and the magenta pigment dispersion refers to an aqueous dispersion of C.I. Pigment Red 122. The amount of each component in the respective examples represents an amount of the solid content or active ingredient amount relative to the total amount of the aqueous ink.

(Preparation of Evaluation Samples) As a pretreatment step, a calcium nitrate aqueous solution, diluted to a calcium concentration of 0.30 wt%, was applied as a pretreatment liquid, at a coating amount of 80.00 g/m², to a white woven fabric made of 100 % cotton cut to a piece of 350 mm × 350 mm. The coated fabric was dried in an oven set at 120 °C for 3 minutes to obtain a pretreated fabric. The pretreated fabric was set in garment printer GTX^{®} pro from Brother Industries, Ltd. Using the aqueous inks prepared in each example and comparative example, the ink amount from the inkjet head was adjusted to 20 pL per pixel, and solid printing was performed at a resolution of 1200 dpi × 1200 dpi to form an image on the pretreated fabric. After image formation, the pretreated fabric was heated in an oven set at 160 °C for 5 minutes to obtain an evaluation sample.

Each example and comparative example was evaluated for ink storage stability, dry rubbing fastness, wash fastness, and hydrolysis resistance according to the methods described below.

(Evaluation of Ink Storage Stability) Each aqueous ink prepared in the examples was placed in a sealed container and stored for one week in a thermostatic chamber from ESPEC Corp., set at 60 °C. The viscosity before and after storage was measured at 25 °C using a TVE25 viscometer from Toki Sangyo Co., Ltd. The rate of change in viscosity after storage, relative to the viscosity before storage, was calculated, and the storage stability of the aqueous ink is evaluated according to the following criteria. The evaluation results are shown in Tables 1 to 4.
A: Change rate less than 10%
B: Change rate 10% or greater

(Evaluation of Dry Rubbing Fastness) The evaluation samples from each sample were tested for dry rubbing fastness according to ISO 105-X12 standard test method to determine the dry rubbing fastness. The grade of dry rubbing fastness of the aqueous ink was evaluated based on the following criteria. The evaluation results and grades are shown in Tables 1 to 4.
A: Grade 3 or higher
B: Grade less than 3

(Wash Fastness of Evaluation Samples Immediately After Preparation) Each evaluation sample of the respective examples was placed, together with a load cloth, into a domestic washing machine AW-304 from Toshiba Corporation within 24 hours after sample preparation. The washing was performed in the standard washing mode with a water volume of 45 L and a weakly alkaline synthetic detergent intended for general household use of 30 g. The above washing procedure was repeated five times. After repeating the above washing procedure five times, the evaluation samples within 72 hours after preparation, i.e., the evaluation samples immediately after preparation, were compared with the evaluation samples before washing. The degree of color fading was determined using grey scale for assessing change in color, as specified in JIS L0804. Based on the determination results, the grade of wash fastness of the evaluation samples immediately after preparation was calculated, and the wash fastness of the aqueous ink was determined according to the following criteria. The evaluation results and the grades of wash fastness of the evaluation samples immediately after preparation are shown in Tables 1 to 4.
A: Grade 4 or higher
B: Grade 3 or higher and less than 4
C: Grade less than 3

(Resistance to Hydrolysis) A hydrolysis resistance test was conducted by placing each evaluation sample of the respective examples in a constant-temperature chamber from ESPEC Corp., set at 70 °C and 95 % relative humidity, and leaving the sample for two weeks. Thereafter, the same washing operation as described in the evaluation of wash fastness above was repeated five times. After five washes, the evaluation samples were compared with the evaluation samples before the hydrolysis resistance test, and the degree of color fading was determined using gray scale for color change specified in JIS L0804. Based on the determination results, the grade of wash fastness of the evaluation samples after the hydrolysis resistance test was calculated. Then, the difference between the wash fastness grade of the evaluation samples immediately after preparation and that of the evaluation samples after the hydrolysis resistance test was calculated, and the hydrolysis resistance of the aqueous ink was evaluated according to the following criteria. The evaluation results are shown in Tables 1 to 4. A good evaluation of hydrolysis resistance means that the difference between the wash fastness grade of the evaluation samples immediately after preparation and that after the hydrolysis resistance test is small. However, if the wash fastness grade of the evaluation samples immediately after preparation is low, even when the hydrolysis resistance evaluation is good, the wash fastness grade after the hydrolysis resistance test remains as low as that immediately after preparation, which means that the long-term wash fastness is also low.
A: Grade ±0
B: Grade higher than -1 and less than ±0
C: Grade -1 or less

As shown in Tables 1 to 4, the aqueous inks of Examples 1 to 31 each contained a pigment, a binder, and a crosslinking agent. The binder was a polyurethane resin having a polyester backbone, and the crosslinking agent was a compound containing an oxazoline group. The ratio of the binder amount to the pigment amount was 1.40 or greater, and the ratio of the crosslinking agent amount to the binder amount was 0.15 or greater. The total solid amount of the aqueous inks of Examples 1 to 31 was 7.20 wt% or greater. In the aqueous inks of Examples 1 to 31, good results, namely "A" or "B," were obtained for all evaluation items.

In contrast, in Comparative Examples 1 and 2, the wash fastness of the evaluation samples immediately after preparation was low, namely rated as "C." The binder contained in the aqueous ink of Comparative Example 1 was a polyurethane resin having a polycarbonate backbone. The functional groups of a polyurethane resin having a polycarbonate backbone exhibit low reactivity with oxazoline groups. Therefore, an appropriate crosslinked structure was not formed, resulting in poor adhesion to the fabric, which was considered to have resulted in the low wash fastness rating of the evaluation samples immediately after preparation. Similarly, the binder contained in the aqueous ink of Comparative Example 2 was a polyurethane resin having a polyether backbone. The functional groups of a polyurethane resin having a polyether backbone also exhibit low reactivity with oxazoline groups. Therefore, an appropriate crosslinked structure was not formed, resulting in poor adhesion to the fabric, which was considered to have resulted in the low wash fastness rating of the evaluation samples immediately after preparation.

Further, the aqueous ink of Comparative Example 3 contained the same binder and crosslinking agent as the aqueous inks of the Examples; however, the ratio of the binder amount to the pigment amount was relatively low at 1.17. That is, compared to the Examples, the binder amount was less relative to the pigment amount. Therefore, a sufficient resin coating film to fix the pigment to the fabric was not formed, which was considered to have resulted in the wash fastness rating of the evaluation samples immediately after preparation being "C."

In Comparative Examples 1 to 3, the evaluation of hydrolysis resistance was "A," which indicated that the difference between the wash fastness of the evaluation samples after the hydrolysis resistance test and the wash fastness immediately after preparation was small. Therefore, the wash fastness grade of the evaluation samples after the hydrolysis resistance test in Comparative Examples 1 to 3 remained as low as the wash fastness immediately after preparation. In other words, in Comparative Examples 1 to 3, the wash fastness of the evaluation samples was initially insufficient such that high wash fastness over a long period cannot be expected.

Further, the aqueous ink of Comparative Example 4 contains the same binder and crosslinking agent as the aqueous inks of the Examples; however, the ratio of the crosslinking agent amount to the binder amount was relatively low at 0.12. That is, compared to the Examples, the crosslinking agent amount was less relative to the binder amount. Therefore, the binder was not suitably crosslinked, and in the hydrolysis resistance test, the ester bonds underwent hydrolysis, impairing the pigment adhesion. As a result, the evaluation of hydrolysis resistance was low, namely rated as "C." In other words, in Comparative Example 4, high wash fastness over a long period could not be maintained.

Further, the aqueous ink of Comparative Example 5 contained CARBODILITE^{®} V-04, a carbodiimide group-containing compound from Nisshinbo Chemical Inc., as the crosslinking agent. A carbodiimide group-containing compound, like an oxazoline group-containing compound, can suitably crosslink the binder containing a polyurethane resin having a polyester backbone. Therefore, a sufficient resin coating film to fix the pigment to the fabric could be formed, and high wash fastness was obtained immediately after preparation of the evaluation samples. On the other hand, the resin coating film of Comparative Example 5 was more hydrophilic than those of the Examples. Therefore, in the hydrolysis resistance test, the ester bonds of the binder were more susceptible to hydrolysis, and the wash fastness after the hydrolysis resistance test was rated as "C." In other words, in Comparative Example 5 as well, high wash fastness over a long period could not be maintained.

Next, a comparative study of the Examples is described. As shown in Table 1, the aqueous inks of Examples 1 to 5 contain the same pigment, crosslinking agent, binder, and wax particles, but their contents vary. Example 4, which has the highest total solid amount, exhibits lower storage stability compared to Examples 1 to 3 and 5. It is considered that as the total solid amount relative to the total amount of the aqueous ink increases, the interaction between resin particles becomes stronger, resulting in decreased storage stability. While the storage stability of the aqueous ink of Example 25, having a total solid amount of 12.70 wt%, is rated as "A," the storage stability of Example 4, having a total solid amount of 13.10 wt%, is rated as "B." Therefore, the total solid amount relative to the total amount of the aqueous ink is preferably 12.70 wt% or less. On the other hand, even when the total solid amount is 12.70 wt% or less, the storage stability of Example 26, in which the ratio of the crosslinking agent amount to the binder amount exceeds 0.40, is rated as "B." Accordingly, the ratio of the crosslinking agent amount to the binder amount is preferably 0.40 or less. Furthermore, in all Examples having a total solid amount of 12.70 wt% or less, the ratio of the binder amount to the pigment amount is 2.80 or less. Therefore, the ratio of the binder amount to the pigment amount is preferably 2.80 or less. In summary, it is preferable that the total solid amount is 12.70 wt% or less, the ratio of the crosslinking agent amount to the binder amount is 0.40 or less, and the ratio of the binder amount to the pigment amount is 2.80 or less.

The aqueous inks of Examples 6 and 7 have the same composition as the aqueous ink of Example 2 except that they contain different binders. The binders contained in the aqueous inks of Examples 2, 6, and 7 are all polyurethane resins having a polyester backbone, but different commercial products are used in each Example. In Examples 2, 6, and 7, there is almost no difference in the evaluation results, indicating that aqueous inks containing a polyurethane resin having a polyester backbone as a binder can achieve good results.

The aqueous ink of Example 8 has the same composition as that of Example 2 except that it contains a different pigment. From the evaluation results of Example 8, it can be understood that, regardless of the pigment, good results can be obtained by appropriately setting the characteristics of the crosslinking agent and binder, the ratio of the crosslinking agent amount to the binder amount, and the ratio of the binder amount to the pigment amount.

The aqueous inks of Examples 9 to 12 have the same composition as that of Example 2 except that the amount of the crosslinking agent differs. As shown in Tables 1 and 2, as the ratio of the crosslinking agent amount to the binder amount increases, the storage stability may decrease. It is considered to be attributable to the increase in the crosslinking agent amount. When the amount of the crosslinking agent in the aqueous ink is relatively high, the dispersion system of the aqueous ink tends to be unstable, which is considered to result in decreased storage stability.

The aqueous ink of Example 13 has the same composition as that of Example 2 except that it contains a different crosslinking agent. The crosslinking agent contained in the aqueous ink of Example 13 is, like that of Example 2, a water-soluble oxazoline group-containing compound, but a different commercial product is used. There is almost no difference in the evaluation results between Example 2 and Example 13. In addition, the aqueous ink of Example 14, which differs from Example 13 only in the amount of the crosslinking agent, also achieves good results. From these results, it can be understood that aqueous inks containing a water-soluble oxazoline group-containing compound as the crosslinking agent can achieve good results.

The aqueous inks of Examples 15 and 16 have the same composition as that of Example 2 except that they contain different crosslinking agents. The crosslinking agents contained in the aqueous inks of Examples 15 and 16 are, like that of Example 2, oxazoline group-containing compounds, but different commercial products are used in each Example. The crosslinking agents contained in the aqueous inks of Examples 15 and 16 are in the form of emulsions, whereas the crosslinking agent contained in Example 2 is water-soluble. In Examples 15 and 16, the evaluation of hydrolysis resistance was "B," which is lower than the evaluation "A" of Example 2. It is considered to be because the water-soluble form of the crosslinking agent allows the binder to be crosslinked more suitably than the emulsion form of the crosslinking agent. By forming a sufficient crosslinked structure, the binder increases its molecular weight and improves its hydrophobicity. In Example 2, it is considered that, in the hydrolysis resistance test, the ester bonds of the binder are less susceptible to hydrolysis, resulting in good hydrolysis resistance.

The humectant contained in the aqueous inks of Examples 17 to 22 is polyethylene glycol. Polyethylene glycol has high compatibility with the binder in the aqueous ink and improves pigment adhesion. Therefore, in Examples 17 to 22, the wash fastness of the evaluation samples immediately after preparation is rated as high, namely "B" or "A." In particular, in Examples 18 to 22, which contain polyethylene glycol having a degree of polymerization of 4 or greater such that the ratio of the polyethylene glycol amount having a degree of polymerization of 4 or greater to the total humectant amount is 0.40 or greater, the wash fastness of the evaluation samples immediately after preparation is especially high, namely "A." Examples of polyethylene glycol having a degree of polymerization of 4 or greater may include tetraethylene glycol, pentaethylene glycol, and hexaethylene glycol. It is considered to be because polyethylene glycol with a relatively high degree of polymerization has a high boiling point and is less volatile, so during the drying process, such polyethylene glycol remains on the fabric for a longer period and stays in contact with the binder for a longer period, thereby forming a suitable resin coating film that covers the pigment. The aqueous inks of Examples 18 to 22 each have a ratio of the wax particle amount to the binder amount of 0.04 or greater, a total solid amount relative to the total amount of the aqueous ink of 12.70 wt% or less, a ratio of the crosslinking agent amount to the binder amount of 0.40 or less, a ratio of the binder amount to the pigment amount of 2.80 or less, a water-soluble crosslinking agent, and further contain a humectant including polyethylene glycol having a degree of polymerization of 4 or greater, with the ratio of the polyethylene glycol amount to the humectant amount being 0.40 or greater.

The aqueous inks of Examples 23 to 26 have the same composition as that of Example 2 except that the amount of wax particles differs. In Example 23, which does not contain wax particles, the dry rubbing fastness is rated as "B," which is lower compared to the other Examples. In contrast, the aqueous inks of the other Examples each contain 0.25 wt% or greater of wax particles, and their dry rubbing fastness is rated as "A." In these Examples other than Example 23, the ratio of the wax particle amount to the binder amount is 0.04 or greater. From these results, it can be understood that aqueous inks containing 0.25 wt% or greater of wax particles have higher abrasion resistance of the resin coating film than aqueous inks that do not contain wax particles. In addition, Example 26 exhibits lower storage stability, rated as "B," compared to the other Examples. It is considered to be because, as described above, the total solid amount increased.

The aqueous inks of Examples 27 and 28 have the same composition as that of Example 3 except that they contain different wax particles. The wax particles contained in the aqueous ink of Example 3 are polyethylene wax AQUACER 1547. The wax particles contained in the aqueous ink of Example 27 are polyethylene wax AQUACER 531. The wax particles contained in the aqueous ink of Example 28 are paraffin wax AQUACER 537. There is almost no difference in the evaluation results among Examples 3, 27, and 28, indicating that good results can be obtained by including wax particles regardless of their type. The melting points of the wax particles used in these Examples are all 100 °C or higher. Therefore, it is considered that including wax particles having a melting point of 100 °C or higher can achieve better results.

The aqueous ink of Example 29 has the same composition as that of Example 27 except that it contains a different surfactant. The aqueous ink of Example 30 has the same composition as that of Example 3 except that it contains a different surfactant. Each of the aqueous inks of Examples 29 and 30 contains the surfactant BYK-3456. When comparing Example 27 with Example 29, there is almost no difference in the evaluation results. Similarly, when comparing Example 3 with Example 30, there is almost no difference in the evaluation results. From these results, it can be understood that good results can be obtained regardless of the type of surfactant.

The aqueous ink of Example 31 differs from that of Example 29 in that it contains tetraethylene glycol, which is polyethylene glycol having a degree of polymerization of 4, as a humectant. Therefore, in Example 31, the wash fastness of the evaluation samples immediately after preparation is particularly high, namely rated as "A."

From the above results, it is found that aqueous inks containing a polyurethane resin having a polyester backbone as a binder and an oxazoline group-containing compound as a crosslinking agent can exhibit favorable wash fastness over a long period by appropriately setting the ratio of the binder amount to the crosslinking agent amount and the ratio of the binder amount to the pigment amount.

The specific examples have been described in detail above; however, these are merely illustrative and do not limit the scope of the claims. The technical scope described in the claims shall include various modifications and alterations of the specific examples illustrated above.

The technical elements described in this specification or the drawings may exhibit technical usefulness either individually or in various combinations, and are not limited to the combinations described in the claims at the time of filing. Furthermore, the technologies illustrated in this specification or the drawings may achieve multiple objectives simultaneously, and achieving even one of these objectives may provide technical usefulness.

Even if each claim in the claims at the time of filing is dependent only on certain other claims, such dependency does not limit the claims to being dependent only on those specific claims. Within a technically consistent scope, each claim may be dependent on other claims not originally dependent upon. That is, the technologies of the respective claims may be combined in various ways as described below.

(Item 1) An aqueous ink for inkjet recording for forming an image on a fabric, comprising a pigment, a binder, and a crosslinking agent, wherein the binder comprises a polyurethane resin having a polyester backbone, the crosslinking agent comprises an oxazoline group-containing compound, a ratio of an amount of the binder to an amount of the pigment is 1.40 or greater, and a ratio of an amount of the crosslinking agent to an amount of the binder is 0.15 or greater.

(Item 2) The aqueous ink for inkjet recording according to Item 1, further comprising a wax particle.

(Item 3) The aqueous ink for inkjet recording according to Item 2, wherein an amount of the wax particle relative to a total amount of the aqueous ink for inkjet recording is 0.25 wt% or greater.

(Item 4) The aqueous ink for inkjet recording according to Item 2 or 3, wherein a ratio of an amount of the wax particle to an amount of the binder is 0.04 or greater.

(Item 5) The aqueous ink for inkjet recording according to any one of Items 2 to 4, wherein a melting point of the wax particle is 100 °C or higher.

(Item 6) The aqueous ink for inkjet recording according to any one of Items 1 to 5, wherein an amount of a total solid content relative to a total amount of the aqueous ink for inkjet recording is 12.70 wt% or less.

(Item 7) The aqueous ink for inkjet recording according to any one of Items 1 to 6, wherein a ratio of an amount of the crosslinking agent to an amount of the binder is 0.40 or less.

(Item 8) The aqueous ink for inkjet recording according to any one of Items 1 to 7, wherein a ratio of an amount of the binder to an amount of the pigment is 2.80 or less.

(Item 9) The aqueous ink for inkjet recording according to any one of Items 1 to 8, wherein an amount of a total solid content relative to a total amount of the aqueous ink for inkjet recording is 7.20 wt% or greater.

(Item 10) The aqueous ink for inkjet recording according to Item 1, wherein an amount of a total solid content relative to a total amount of the aqueous ink for inkjet recording is 12.70 wt% or less, a ratio of an amount of the crosslinking agent to an amount of the binder is 0.40 or less, and a ratio of an amount of the binder to an amount of the pigment is 2.80 or less.

(Item 11) The aqueous ink for inkjet recording according to any one of Items 1 to 10, wherein the crosslinking agent is water-soluble.

(Item 12) The aqueous ink for inkjet recording according to any one of Items 1 to 11, further comprising a humectant, wherein the humectant comprises polyethylene glycol.

(Items 13) The aqueous ink for inkjet recording according to Item 12, wherein the polyethylene glycol has a degree of polymerization of 4 or greater.

(Item 14) The aqueous ink for inkjet recording according to Item 12 or 13, wherein a ratio of an amount of the polyethylene glycol to a total content of the humectant is 0.40 or greater.

(Item 15) The aqueous ink for inkjet recording according to Item 2, wherein a ratio of an amount of the wax particle to an amount of the binder is 0.04 or greater, an amount of a total solid content relative to a total amount of the aqueous ink for inkjet recording is 12.70 wt% or less, a ratio of an amount of the crosslinking agent to an amount of the binder is 0.40 or less, a ratio of an amount of the binder to an amount of the pigment is 2.80 or less, the crosslinking agent is water-soluble, the aqueous ink for inkjet recording further comprises a humectant, the humectant comprises polyethylene glycol having a degree of polymerization of 4 or greater, and a ratio of an amount of the polyethylene glycol to a total amount of the humectant is 0.40 or greater.

(Item 16) An ink set comprising the aqueous ink for inkjet recording according to any one of Items 1 to 15, and a pretreatment liquid to be applied to a fabric prior to forming an image on the fabric using the aqueous ink for inkjet recording.

(Item 17) An inkjet recording apparatus comprising an ink storage section, an ink ejection unit and an aqueous ink for inkjet recording according to any one of Items 1 to 15 stored in the ink storage section, wherein the ink ejection unit is configured to eject the aqueous ink for inkjet recording to form an image on a fabric.

(Item 18) An image forming method for forming an image on a fabric by an inkjet recording method, comprising an image forming step of forming an image on the fabric using an aqueous ink for inkjet recording, and a drying step for drying the aqueous ink for inkjet recording by heating the fabric on which the image has been formed, wherein the aqueous ink comprises a pigment, a binder, and a crosslinking agent, wherein the binder comprises a polyurethane resin having a polyester backbone, the crosslinking agent comprises an oxazoline group-containing compound, a ratio of an amount of the binder to an amount of the pigment is 1.40 or greater, and a ratio of an amount of the crosslinking agent to an amount of the binder is 0.15 or greater.

(Item 19) The image forming method according to Item 18, further comprising a pretreatment step for applying a pretreatment liquid to the fabric before the image forming step, wherein the pretreatment liquid is applied to an area of the fabric where the image is to be formed.

While the invention has been described in conjunction with various example structures outlined above and illustrated in the figures, various alternatives, modifications, variations, improvements, and/or substantial equivalents, whether known or that may be presently unforeseen, may become apparent to those having at least ordinary skill in the art. Accordingly, the example embodiments of the disclosure, as set forth above, are intended to be illustrative of the invention, and not limiting the invention. Various changes may be made without departing from the spirit and scope of the disclosure. Therefore, the disclosure is intended to embrace all known or later developed alternatives, modifications, variations, improvements, and/or substantial equivalents.

## Claims

1. An aqueous ink for inkjet recording for forming an image on a fabric, comprising:
a pigment, a binder, and a crosslinking agent, more particularly a water-soluble crosslinking agent, wherein
the binder comprises a polyurethane resin having a polyester backbone,
the crosslinking agent comprises an oxazoline group-containing compound,
a ratio of an amount of the binder to an amount of the pigment is 1.40 or greater, more particularly 1.40 or greater and 2.80 or less, and
a ratio of an amount of the crosslinking agent to an amount of the binder is 0.15 or greater, more particularly 0.15 or greater and 0.40 or less.

2. The aqueous ink for inkjet recording according to claim 1, further comprising a wax particle.

3. The aqueous ink for inkjet recording according to claim 2, wherein an amount of the wax particle relative to a total amount of the aqueous ink for inkjet recording is 0.25 wt% or greater.

4. The aqueous ink for inkjet recording according to claim 2 or 3, wherein a ratio of an amount of the wax particle to an amount of the binder is 0.04 or greater.

5. The aqueous ink for inkjet recording according to any one of claims 2 to 4, wherein a melting point of the wax particle is 100 °C or higher.

6. The aqueous ink for inkjet recording according to any one of claims 1 to 5, wherein an amount of a total solid content relative to a total amount of the aqueous ink for inkjet recording is 12.70 wt% or less, more particularly 7.20 wt% or greater and 12.70 wt% or less.

7. The aqueous ink for inkjet recording according to claim 1, wherein
an amount of a total solid content relative to a total amount of the aqueous ink for inkjet recording is 12.70 wt% or less,
a ratio of an amount of the crosslinking agent to an amount of the binder is 0.40 or less, and
a ratio of an amount of the binder to an amount of the pigment is 2.80 or less.

8. The aqueous ink for inkjet recording according to any one of claims 1 to 7, further comprising a humectant,
wherein the humectant comprises polyethylene glycol.

9. The aqueous ink for inkjet recording according to claim 8, wherein the polyethylene glycol has a degree of polymerization of 4 or greater.

10. The aqueous ink for inkjet recording according to claim 8 or 9, wherein a ratio of an amount of the polyethylene glycol to a total amount of the humectant is 0.40 or greater.

11. The aqueous ink for inkjet recording according to claim 2, wherein
a ratio of an amount of the wax particle to an amount of the binder is 0.04 or greater, an amount of a total solid content relative to a total amount of the aqueous ink for inkjet recording is 12.70 wt% or less,
a ratio of an amount of the crosslinking agent to an amount of the binder is 0.40 or less, a ratio of an amount of the binder to an amount of the pigment is 2.80 or less,
the crosslinking agent is water-soluble,
the aqueous ink for inkjet recording further comprises a humectant,
the humectant comprises polyethylene glycol having a degree of polymerization of 4 or greater, and
a ratio of an amount of the polyethylene glycol to a total amount of the humectant is 0.40 or greater.

12. An ink set comprising the aqueous ink for inkjet recording according to any one of claims 1 to 11, and a pretreatment liquid to be applied to a fabric prior to forming an image on the fabric using the aqueous ink for inkjet recording.

13. An inkjet recording apparatus comprising:
an ink storage section;
an ink ejection unit; and
an aqueous ink for inkjet recording according to any one of claims 1 to 11 stored in the ink storage section,
wherein the ink ejection unit is configured to eject the aqueous ink for inkjet recording to form an image on a fabric.

14. An image forming method for forming an image on a fabric by an inkjet recording method, comprising:
an image forming step of forming an image on the fabric using an aqueous ink for inkjet recording; and
a drying step for drying the aqueous ink for inkjet recording by heating the fabric on which the image has been formed,
wherein
the aqueous ink comprises a pigment, a binder, and a crosslinking agent, more particularly a water-soluble crosslinking agent,
the binder comprises a polyurethane resin having a polyester backbone,
the crosslinking agent comprises an oxazoline group-containing compound,
a ratio of an amount of the binder to an amount of the pigment is 1.40 or greater, more particularly 1.40 or greater and 2.80 or less, and
a ratio of an amount of the crosslinking agent to an amount of the binder is 0.15 or greater, more particularly 0.15 or greater and 0.40 or less.

15. The image forming method according to claim 14, further comprising a pretreatment step for applying a pretreatment liquid to the fabric before the image forming step,
wherein the pretreatment liquid is applied to an area of the fabric where the image is to be formed.
